# NEW EUROPEAN PATENT SPECIFICATION

(11) **EP 0 237 090 B2**
(45) Date of publication and mention of the opposition decision: **14.05.1997**
(45) Mention of the grant of the patent: 29.11.1989
(21) Application number: 87200234.0
(22) Date of filing: 13.02.1987
(51) Int. Cl.: G09B 21/00

(54) **Tactile relief display device and method for manufacturing it**
Taktile Reliefabbildungsvorrichtung und Verfahren zu ihrer Herstellung
Dispositif d'affichage en relief tactile et son procédé de fabrication

(30) Priority: 24.02.1986 NL 8600453
(43) Date of publication of application: 16.09.1987
(73) Proprietor: F.J. TIEMAN B.V., 3235 XK Rockanje (NL)
(72) Inventor: Tieman, Frans Jan, NL-3235 XG Rockanje (NL); Zeehuisen, Kees, NL-3237 RB Rockanje (NL)
(74) Representative: Bakker, Gilles Egbert, Ir.

(56) References cited:
- FR-A- 2 565 010
- JP-A- 36 925
- JP-A- 332 236
- JP-A- 5 324 295
- JP-A- 5 722 674
- US-A- 4 019 073
- US-A- 4 044 350
- US-A- 4 435 666
- US-A- 4 473 356

## Description

The invention relates to an electromechanical relief display device provided with a frame and at least one tactile member which is movable between a first position and a second position, such that by touching it a person can determine in which of said positions the tactile member is,.which tactile member is coupled to an elongated piezoelectric flexion member having a conducting central leaf with at at least one end a protruding part, which flexion member may be bent under influence of voltages applied to it and which is supported in the said frame by supporting means in two locations along its length and in a third location is coupled to the said tactile member, the said third location being located outside the part between said first and second locations.

Such an electromechanical relief display device is known from the publication of Koichi Akatsuka, Akiyoshi Morita, Tsuneo Nimura, entitled "Paperless Braille Computer Communication Terminals", page 75 to 80, distributed in English and Japanese on December 3 and 4, 1984 by the Society for the Research of Sensation Substitution to the attendants of the 10th Sensation Substitution Symposium held at the Tokyo Office of
Kowa Kabushiki Kaisha,
4-14 Nihonbashi, 3-Chome,
CHUO-KU TOKYO, Japan.

In this publication, page 77, fig. 2 (C) an electromechanical relief display device of the indicated type has been shown, in which the flexion members at one side ("first location") are fixedly attached by mounting the whole member that is to say all conducting layers and both piezoelectric layers in a slit in the frame. Further a support member contacts the lower side of the flexion member ("second location"). With this construction with a stiff mounting at one end and a support in the middle region of the flexion member the excursion of the other free end of the flexion member will be reduced, when voltages are applied to cause the flexion member to move it other end away from the side where it contacts the support.

The invention aims to provide an electromechanical relief display device, in which the excursion of the free end and the driving force thereof are increased.

The above aims are attained by the features of the characterising part of claim 1.

In this respect it is remarked, that the protruding part of the central leaf allows for free bending of the flexion member, due to the high flexibility of said leaf compared to that of the flexion member with its electromechanical layers and further conducting leafs. On the other hand this extending central leaf is so short that displacement of the point where it leaves the electromechanical layers is strongly counteracted, because bending in two directions would be necessary to obtain such a displacement. This would induce relatively strong curvatures in the relatively short extension of the leaf. This is so, because the direction of the leaf at the location where it leaves the electromechanical layers is predominantly determined by the relatively high stiffness of the flexion member with said layers.

According to a further embodiment of the invention it is provided that the clamping members are provided with clamping surfaces which are convex toward the flexion member. Because with the invention at the location of the clamping some pivot movement of the flexion member is possible, this convexity of the clamping members leads to an engagement of flexion member and clamping members, which is precise as well as flexible.

In the cited publication of Koichi Akatsuka et al an electromechanical display device has been shown with a relief display device according to the preamble of claim 1, in which a plurality of flexion members are mounted stepwise above each other in their common flexion plane, the flexion members all having the same length and the first, second and third locations being arranged in corresponding stepwise configurations.

A further embodiment of the invention allows for an improvement of this device by providing that in the first support location of the flexion members the support means contains a weld or solder connection between a conducting part of each flexion member and a conducting surface, which is substantially parallel to the flexion plane of the flexion members.

According to a further elaboration the invention provides an extremely advantageous manufacturing method for an electromechanical device provided with a frame and a plurality of tactile members, which are movable between a first position and a second position, such that by touching them a person can determine in which of said positions the tactile members are, which tactile members each are coupled to one out of a plurality of elongated piezoelectric flexion members, which may be bent under the influence of voltages applied to them and which are supported in the said frame by supporting means in two locations along there lengths and in their third location are coupled to one of said tactile members, said plurality of flexion members being mounted stepwise above each other in their common flexion plane, the flexion members all having the same length and the first, second and third locations being arranged in corresponding stepwise configurations, in the first support location of the flexion members the support means containing a weld or solder connection between a conducting part of each flexion member and a conducting surface, which is substantially parallel to the flexion plane of the flexion members. This method consists in that the flexion members in their third location are positioned such that they are adjusted with respect to the tactile members and that the flexion members in the first locations are attached in this adjusted condition.

A special advantageous elaboration of this method for manufacturing an electromechanical relief display device of the above indicated type, which further has a protruding part of a conducting central leaf and in which according to claim 1 of this specification the support means in the second location for each flexion member consists in two clamping members between which a flexion member is clamped, consists in that the attachment of the flexion members at the first location occurs by welding or soldering the protruding part of the conducting central leaf to said conducting surface.

A further advantage of a display device manufactured in this way consists in that the tactile members are small pins having a fixed length in dependence on their location in the step configuration, which fact allows for demounting and mounting without necessity that the same pin is mounted at its previous location and consequently eases cleaning and service and saves time and labour.

In this respect it is remarked that such devices in the long run pick up a certain quantity of dirt, for instance cutaneous fat. It is then common to demount such a device, for instance a braille reading ruler and to clean the tactile members, implemented as pins with rounded heads, as well as the plate with holes through which the pins may protrude.

With the discussed embodiment of the invention a pin of predetermined length is always suitable for each and any display point located at the same place in the step configuration.

The invention preferably is executed as an extended braille cell with two rows of four tactile points. Consequently it is possible to give apart from the usual braille notation additional information such as capitals, cyphers, musical notations and so on. Such information can also be displayed in six-points braille display cells by vibrating one or more tactile members, as is known from for instance US-A-4,445,871. The invention allows the same procedure.

The invention in the following is elucidated on hand of the drawing in which:

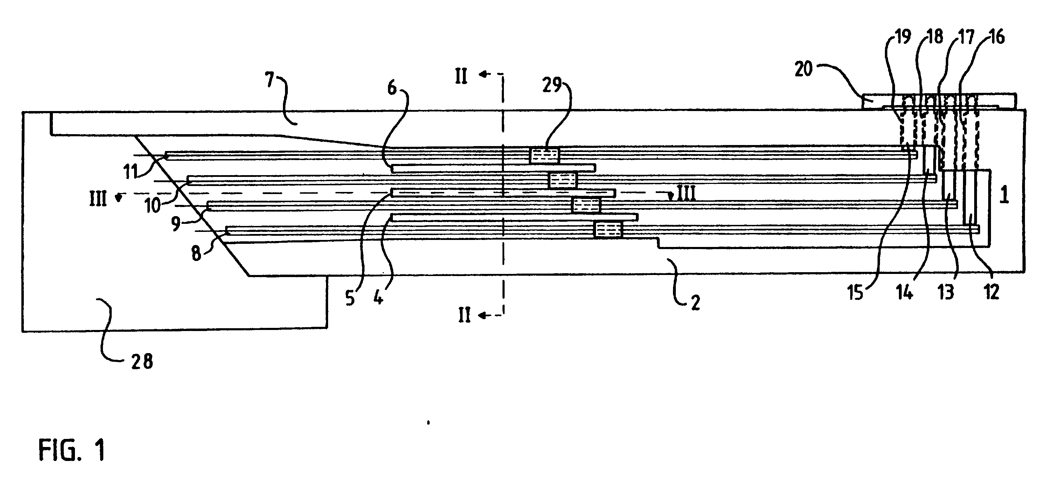

Fig. 1 schematically shows a side view of a braille cel in which the invention has been applied;
Fig. 2 is a cross-section through that cell over the line II-II;
Fig. 3 shows a view, partly in cross-section and on a larger scale over the line III-III;
Fig. 4 shows a partial view on an enlarged scale of Fig. 2;
Fig. 5 shows a view of a reed; and
Fig 6. shows on a larger scale the clamping of a reed.

In the drawing reference 1 indicates a frame with a lower beam 2, a central baffle 3 with at both sides attached to it protruding horizontal support baffles 4, 5 and 6, and an upper beam 7.

At both sides of baffle 3 in horizontally open interspaces between the lower beam 2 and the first support baffle 4; between the first support baffle 4 and the second support baffle 5; between the second support baffle 5 and the third support baffle 6; and between the third support baffle 6 and the upper beam 7 a so-called piezoelectric reed 8, 9, 10 and 11 resp. is mounted. With these reeds pins 12, 13, 14, and 15 cooperate, which can freely move up and down in bores 16, 17, 18 and 19 made in the upper beam 7. On this further a palping plate 20 has been mounted in a removable way with holes in the elongation of the holes 16, 17, 18 and 19. These pins 12, 13, 14 and 15 have a length adapted to the height of the reeds 8, 9, 10 or 11 with which they cooperate, such that if the reed flexes in a way known per se under influence of an electric voltage, a rounded head of the related pin protrudes at the upper side of the plate and can therewith be sensed. In this shown embodiment there are two rows of four pins which means that a braille display of a character or sign is possible with additional information such as an indication for cyphers, capitals, musical notation and such like.

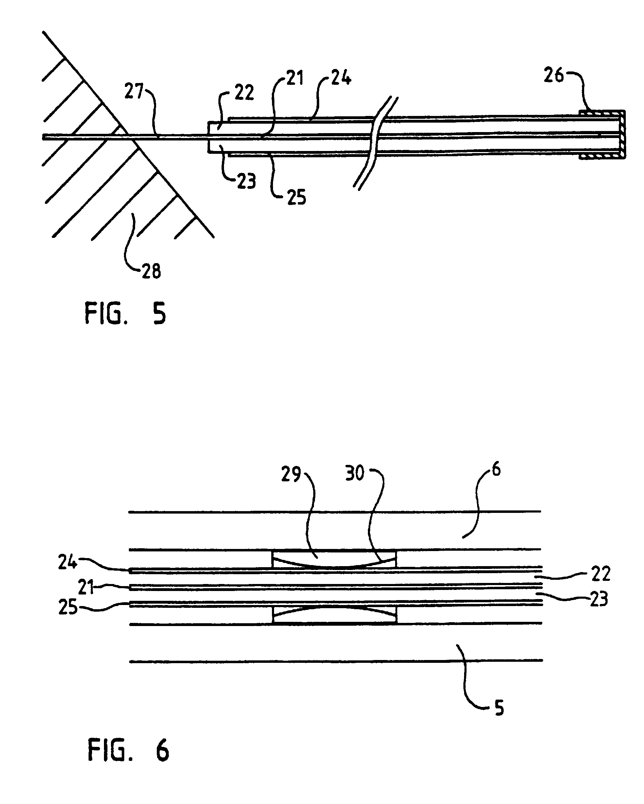

As more specifically shown in Fig. 5 the reeds 8, 9, 10 and 11 are formed by a thin central conducting leaf 21 of for instance brass, at both sides of which a piezoelectric layer 22 and 23 resp. has been applied with there on a conducting layer 24 and 25 resp., for instance from silver, nickel or gold.

As visible in Fig. 5 the conducting layers 24 and 25 end shortly before the attachment end of the reed, whereas the central leaf 21 of conducting materials extends beyond the piezoelectric layers 22 and 23 by means of an extension 27.

At its braille end the central leaf 21 ends short of this end of the read, so that the conducting layers 24 and 25 can be connected with a connection member 26 without any danger to contact with the leaf 21.

At its other end of the reed the extension 27 of the central leaf is sufficiently stiff to allow a stable attachment for instance by means of soldering or welding to a plate 28, for instance a print plate locally having conducting webs 32.

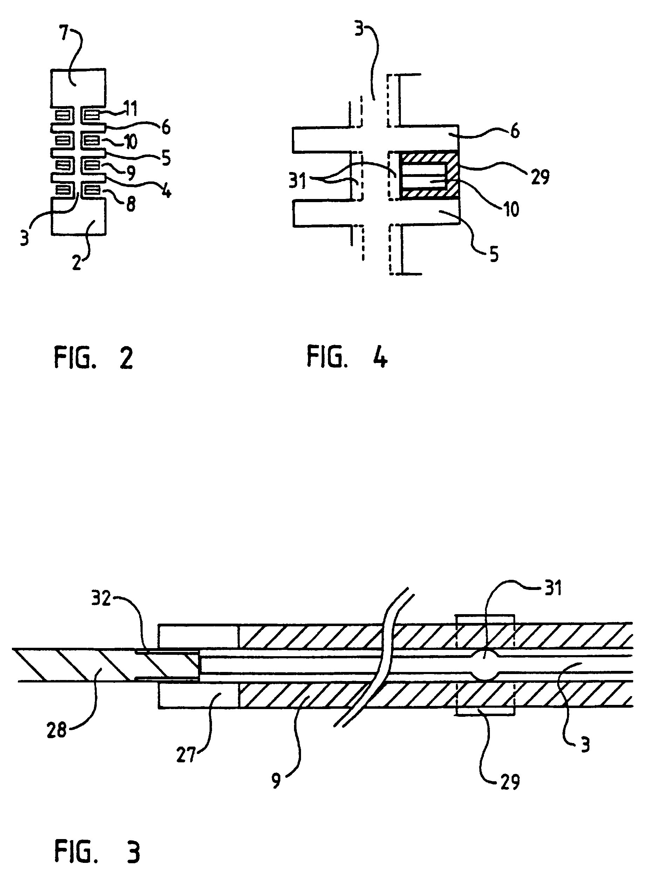

Fig. 4 and 6 show how the reed 10 is clamped between the support baffles 5 and 6 by means of a dip 29 having a U-shape with plane outer surfaces engaging the baffles 5 and 6 resp. and inner surfaces having a convex shape 30. This clip engages a round abutment part 31 (vide Fig. 3 and 4) applied to the central baffle 3 and serving the additional purpose to prevent the reeds 8-11 to engage the central baffle 3.

The device shown in the drawing is in fact a braille cell for only one character. A plurality of such cells can be juxtapositioned forming a braille display ruler.

However, the invention is not limited to applications for forming braille characters but encompasses also devices for communicating arbitrary patterns to a blind or visual handicapped person.

Manufacturing the above described device can be realized by mounting it completely without attaching the prolongations 27 of the central leafs 21 to the plate 28. Then gauge parts are inserted between the frame and in the drawing the right ends of the reeds, so that they take an exactly defined position irrespective of any reed curvature or imperfectness of the clamping means or dips 29.

In this position the protruding parts 27 of the reeds are soldered or welded to plate 28 which result in an exact definition of the reed's ends cooperating with the pins 16-19, so that no further adjustment is needed. Consequently the pins 16, 17, 18 and 19 each may have an own predetermined length. This allows for an important labour saving because adjustments are rather time consuming. Moreover the palping plate 20 with its reading surface can be deaned by removing the pins and cleaning them separately Without need to see to it that afterwards each pin is returned to its original position. This is an important advantage simplifying cleaning and/or service activities in a considerable extend.

The braille cell shown in the drawing has the advantage that a braille character is formed at the outer end, so that it is possible to position two cells with their braille ends against each other, after which such like double cells may be arranged in a row to form two consecutive braille reading lines in close proximity.

## Claims

1. Electromechanical relief display device provided with a frame (1,2,7) and at least one tactile member (12-15) which is movable between a first position and a second position, such that by touching it a person can determine in which of said positions the tactile member is, which tactile member is coupled to an elongated piezoelectric flexion member (8,11) having a conducting central leaf (21) with at at least one end a protruding part (27), which flexion member may be bent under influence of voltages applied to it and which is supported in the said frame by supporting means (28-30) in two locations along its length (28,29) and in a third location is coupled to the said tactile member (12-15), the said third location being located outside the part between said first and second locations **characterized** in that the protruding part is located at the first location and is attached to the frame and that the support means in the second location (29) consist in two clamping members (29), between which the flexion member is clamped.

2. Relief display device according to claim 1, **characterized** in that the clamping members (29) are provided with clamping surfaces (30) which are convex toward the flexion member.

3. Relief display device according to claim 1 or 2, in which a plurality of flexion members are mounted stepwise above each other in their common flexion plane, the flexion members all having the same length and the first, second and third locations being arranged in corresponding stepwise configurations **characterized** in that in the first support location of the flexion members the support means contains a weld or solder connection between a conducting part of each flexion member and a conducting surface, which is substantially parallel to the flexion plane of the flexion members.

4. Method for manufacturing an electromechanical relief display device provided with a frame (1,2,7) and a plurality of tactile members (12-15), which are movable between a first position and a second position, such that by touching them a person can determine in which of said positions the tactile members are, which tactile members each are coupled to one out of a plurality of elongated piezoelectric flexion members (8-11), which may be bent under the influence of voltages applied to them and which are supported in the said frame by supporting means (28-30) in two locations along there lengths (28,29) and in their third location are coupled to one of said tactile members (12-15), said plurality of flexion members being mounted stepwise above each other in their common flexion plane, the flexion members all having the same length and the first, second and third locations being arranged in corresponding stepwise configurations, and the support means in the first support location of the flexion members containing a weld or solder connection between a protruding portion of a conducting part of each flexion member and a conducting surface, which is substantially parallel to the flexion plane of the flexion members,
**characterized** in that the flexion members at their second locations are mounted somewhat tiltable in their flexion plane, that the flexion members in their third location are positioned such that they are adjusted with respect to the tactile members and that the flexion members in the first locations are attached in this adjusted condition.

5. Method according to claim 4 for manufacturing an electromechanical relief display device in which the flexion members at their first location have a protruding part of a conducting central leaf (21),
**characterized** in that the support means in the second location for each flexion member consists in two clamping members (29) between which a flexion member is clamped and that the attachment of the flexion members at the first location occurs by welding or soldering the protruding part (21) of the conducting central leaf to said conducting surface.

## Patentansprüche

1. Elektro-mechanische Reliefabbildungsvorrichtung, die mit einem Gestell (1,2,7) und wenigstens einem Taktilteil (12-15), der beweglich ist zwischen einer ersten Lage und einer zweiten Lage, derart dass eine Person durch Berührung feststellen kann in welcher der genannten Lagen der Taktilteil ist, versehen ist, welcher Taktilteil mit einem länglichen piezoelektrischen Flexionsteil (8,11), der ein leitendes zentrales Blatt (21) mit wenigstens an der ersten Stelle einem ausragenden Teil (27) hat, welcher Flexionsteil unter Einwirkung von Spannungen, die an ihn angelegt werden gebogen werden kann und der im genannten Gestell von Unterstützungsmittel (28-30) in zwei Stellen (28,29) entlang seiner Länge unterstützt wird und in einer dritten Stelle mit dem genannten Taktilteil (12-15) gekuppelt ist, wobei die genannte dritte Stelle ausserhalb des Teiles zwischen den ersten und den zweiten Stellen gelegen ist, **dadurch gekennzeichnet**, dass der ausragende Teil an der ersten Stelle gelegen ist und am Gestell befestigt ist und dass die Unterstützungsmittel an der zweiten Stelle (29) aus zwei Klemmteilen (29) bestehen, zwischen welchen der Flexionsteil eingeklemmt ist.

2. Reliefabbildungsvorrichtung nach Anspruch 1, **dadurch gekennzeichnet**, dass die Klemmteile (29) mit Klemmflächen (30) versehen sind, die konvex zum Flexionsteil sind.

3. Reliefabbildingsvorrichtung nach Anspruch 1 oder 2, in der eine Mehrzahl von flexionsteilen stufenweise übereinander in ihrem gemeinsamen Biege-ebene angeordnet sind, die Flexionsteile alle dieselbe Länge haben und die erste, zweite und dritte Unterstützungsstellen in übereinstimmenden stufenweise Konfigurationen angeordnet sind **dadurch gekennzeichnet**, dass an der ersten Unterstützungsstelle der Flexionsteile die Unterstützungsmittel eine Schweiss- oder Lötverbindung zwischen einem leitenden Teil jedes Flexionsteils und einer leitenden Fläche, die wesentlich parallel zur Biege-ebene der Flexionsteile ist, enthalten.

4. Verfahren zur Herstellung einer elektromechanischen Reliefabbildungsvorrichtung, die mit einem Gestell (1,2,7) und einer Mehrzahl von Taktilteilen (12-15), der beweglich ist zwischen einer ersten Lage und einer zweiten Lage, derart dass eine Person durch Berührung feststellen kann in welcher der genannten Lagen der Taktilteil ist, versehen ist, welcher Taktilteil mit einem länglichen piezoelektrischen Flexionsteil (8-11), der unter Einwirkung von Spannungen, die an ihn angelegt werden gebogen werden kann und der im genannten Gestell von Unterstützungsmittel (28-30) in zwei Stellen (28,29) entlang seiner Länge unterstützt wird und in einer dritten Stelle mit dem genannten Taktilteil (12-15) gekuppelt ist, genannte Mehrzahl von Flexionsteilen stufenweise übereinander in ihrem gemeinsamen Biege-ebene angeordnet sind, die Flexionsteile alle dieselbe Länge haben und die erste, zweite und dritte Unterstützungsstellen in übereinstimmenden stufenweise Konfigurationen angeordnet sind und die Unterstützungsmittel in der ersten Unterstützungsstelle der Flexionsteile eine Schweiss- oder Lötverbindung zwischen einem ausragenden Teil eines Unterstützungsteil jedes Flexionsteils und einer leitenden Fläche, die wesentlich parallel zur Biege-ebene der Flexionsteil ist, enthalten, **dadurch gekennzeichnet**, dass die Flexionsteil an ihrer zweiten Stelle etwas verschwenkbar in ihrer Biege-ebene montiert sind, dass die Flexionsteile an ihrer dritten Stelle derart angeordnet sind, dass sie hinsichtlich der Taktilteile adjustiert sind und dass die Flexionsteile an ihre ersten Stellen in dieser adjustierten Lage befestigt werden.

5. Verfahren nach Anspruch 4 zur Herstellung einer elektromechanischen Reliefabbildungsvorrichtung, in welcher die Flexionsteile an ihrer ersten Stelle einen ausragenden Teil eines leitendes zentrales Blatt (21) hat, **dadurch gekennzeichnet**, dass die Unterstützungsmittel der Flexionsteile an der zweiten Stelle aus zwei Klemmteile (29) besteht, zwischen welchen eine Flexionteil eingeklemmt ist und dass die Befestigung der Flexionsteile an der ersten Stelle stattfindet durch schweissen oder löten des ausragenden Teils (21) des leitenden Zentralblattes an die genannte leitende Oberfäche.

## Revendications

1. Dispositif électro-méchanique d'affichage en relief, prévu d'un bâti (1,2,7) et au moins un membre tactile (12-15) mouvable entre une première position et une seconde position, tel qu'une personne, si elle le touche, peut déterminer en quelle des dites positions est le membre tactile, lequel membre tactile est accouplé à un membre de flexion piézo-électrique élongé (8,11), quel a une lame conductrice centrale (21) avec au moins à la première location une partie allongée (27), quel membre de flexion peut être flexé sous l'influence des tensions y appliqués et qui est supporté dans ledit bâti par moyens de support (28-30) en deux locations le long de sa longueur et à une troisième locations est accouplé audit membre tactile (12-15), ladite troisième location se trouve au dehors de la partie entre la première et la deuxième location,
**caractérisé** en ceque la partie allongée est située à la première location et a été affixée au bâti et que les membres de support à la deuxième location consistent de deux membres de serrage (29), le membre de flexion étant serré entre eux.

2. Dispositif d'affichage en relief suivant la revendication 1, **caractérisé** en ceque les membres de serrage (29) sont prévus de surfaces de serrage (30) convexes au côté du membre de flexion.

3. Dispositif d'affichage en relief suivant la revendication 1 ou 2, dans lequel une pluralité des membres de flexion ont été montés par degrés l'un au-dessus l'autre dans leur plan de flexion commun, les membres de flexion ayant tous la même longeur et les premières, deuxièmes et troisièmes locations étant arrangées en configurations similaires par degrés **caractérisé** en ceque dans la première location de support des membres de flexion les moyens de support contient une connection soudée ou brasée entre une partie conductrice de chaque membre de flexion et une surface conductrice qui en principe est parallel au plan de flexion des membres de flexion.

4. Procédé de fabrication d'un dispositif électro-mechanique d'affichage en relief prévu d'un bâti (1,2,7) et une pluralité des membres tactile (12-15) mouvable entre une première position et une seconde position, tel qu'une personne, si elle le touche, peut déterminer en quelle des dites positions est le membre tactile, chaque membre tactile est accouplé à un d'une pluralité des membres de flexion piézo-électrique (8-11), qui peut être flexé sous l'influence des tensions y appliqués et qui est supporté dans ledit bâti par moyens de support (28-30) en deux locations le long de sa longueur (28,29) et à une troisième location est accouplé à un desdits membres tactile (12-15), ladite pluralité des membres de flexion ont été montés par degrés l'un au-dessus l'autre dans leur plan de flexion commun, les membres de flexion ayant tous la même longueur et les premières, deuxièmes et troisièmes locations de support étant arrangées en configurations similaires par degrés et les moyens de support dans la première location de support des membres de flexion contienent une connection soudée ou brasée entre une partie allongée d'une partie conductrice de chaque membre de flexion et une surface conductrice qui en principe est parallel ou plan de flexion des membres de flexion, **caractérisé** en ceque les membres de flexion à leurs deuxième locations ont été montés un peu basculable dans leur plan de flexion, que les membres de flexion à leurs troisiémes locations ont été positionnés de maniére qu'ils sont ajustés en relation des membres tactiles et que les membres de flexion à leurs premières locations sont fixés en cette condition ajustée.

5. Procédé suivant la revendication 4 pour la fabrication d'un dispositif électro-mechanique d'affichage en relief dans lequel les membres de flexion à leur première location ont une partie allongée d'une lame conductrice centrale (21), **caractérisé** en ceque les moyens de support de chaque membre de flexion à la deuxième location consistent de deux membres de serrage (29) entre eux le membre de flexion étant serré et que la connection des membres de flexion à la première location est réalisée par souder ou braser la partie allongée (21) de la lame conductrice centrale à ladite surface conductrice.
